(19)

Europäisches
Patentamt
European
Patent Office
Office européen
des brevets

(11)  **EP 1 926 276 B1**

(12)  **EUROPEAN PATENT SPECIFICATION**

(45) Date of publication and mention
of the grant of the patent:
**03.12.2008 Bulletin 2008/49**

(51) Int Cl.:
*H04L 29/06* *(2006.01)*

(21) Application number: **06024317.7**

(22) Date of filing: **23.11.2006**

(54) **Load balancing in a peer-to-peer system**

Lastausgleich in einem Peer-to-Peer System

Equilibrage dans un système peer-to-peer

(84) Designated Contracting States:
**DE GB**

(43) Date of publication of application:
**28.05.2008 Bulletin 2008/22**

(73) Proprietor: **NTT DoCoMo Inc.**
**Chiyoda-ku**
**Tokyo 100-6150 (JP)**

(72) Inventors:
• **Kellerer, Wolfgang, Dr.**
**82256 Fürstenfeldbruck (DE)**
• **Despotovic, Zoran, Dr.**
**80469 Munich (DE)**
• **Zöls, Stefan**
**80801 Munich (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**EP-A- 1 696 630**        **US-A1- 2003 055 892**
**US-A1- 2005 086 288**

• ION STOICA: "Chord: A Scalable Peer-to-peer
Lookup Service for Internet Applications"
PROCEEDINGS OF ACM SIGCOMM, XX, XX, 2001,
page complete, XP002332182
• SURANA ET AL: "Load balancing in dynamic
structured peer-to-peer systems"
PERFORMANCE EVALUATION, AMSTERDAM,
NL, vol. 63, no. 3, March 2006 (2006-03), pages
217-240, XP005186637 ISSN: 0166-5316
• DAVID R. KARGER, MATTHIAS RUHL: "Simple
Efficient Load Balancing Algorithms for peer-to-
peer systems" SPAA'04 JUNE 27-30,
BARCELONA, SPAIN, 2004, pages 36-43,
XP002423646
• KRRISHNARAM KENTHAPADI: "Decentralized
Algorithms using both Local and Random Probes
for P2P Load Balancing" SPAA'5, JULY 18-20,
LAS VEGAS, NEVADA, USA, 2005, pages 135-144,
XP002423647

**Description**

Background

The present invention relates to the field of peer-to-peer overlay systems and in particular to load balancing in hierarchical overlay peer-to-peer systems.

Overlay networks are networks, which build on top of another, underlying physical network. Nodes in the overlay can be thought of as being connected by virtual or logical links, each of which corresponds to a path, comprising one or many physical links of the underlying network. For example, many peer-to-peer networks are overlay networks because they run on top of the Internet. Dial-up Internet is an example for an overlay upon the telephone network. Overlay networks can be constructed in order to permit lookups of application level concepts, such as files or data of an arbitrary type, which are not supported by ordinary routing protocols, for example IP (internet protocol) routing.

A peer-to-peer (P2P) network is a network that relies primarily on the computing power and bandwidth of the participants, referred to as peers or peer nodes, in the network, rather than concentrating in a relatively low number of servers. Thus, a peer-to-peer network does not have the notion of clients or servers, but only equal peer nodes that simultaneously function as both "clients" and "servers" to the other nodes or peers on the network. Peer-to-peer networks are typically used, for example, for sharing content files containing audio, video, data or anything in digital format, or for transmitting real time data, such a telephonic traffic. An important goal of peer-to-peer networks is that all clients provide resources, including bandwidth, storage space and computing power. Thus, as nodes arrive and demand on the system increases, the total capacity of the system also increases.

As mentioned before, the peer-to-peer overlay network consists of all the participating peers as overlay network nodes. There are overlay links between any two nodes that know each other, i.e. if a participating peer knows the location of another peer in the peer-to-peer network, then there is a directed edge from the former node to the latter node in the overlay network. Based on how the nodes in the overlay network are linked to each other, one can classify the peer-to-peer networks as unstructured or structured.

An unstructured peer-to-peer network is formed when the overlay links are established arbitrarily. Such networks can be easily constructed as a new peer that wants to join the network, can copy existing links of another node and form its own links over time. In an unstructured peer-to-peer network, if a peer wants to find a desired content in the network, the carrier has to be flooded through the network in order to find as many peers as possible that share the content. The main disadvantage with such networks is that the queries may not always be resolved. A popular content is likely to be available at several peers and any peer searching for it is likely to find the same, but, if a peer is looking for a rare or a not-so-popular content shared by only a few other peers, then it is highly unlikely that the search will be successful. Since there is no correlation between a peer and the content managed by it, there is no guarantee that flooding will find a peer that has the desired data. Furthermore, flooding also causes a high amount of signaling traffic in the network, and hence such networks have a very poor search efficiency.

Structured peer-to-peer networks overcome the limitations of unstructured networks by maintaining a distributed hash table (DHT) and by allowing each peer to be responsible for a specific part of the content in the network. These networks use hash functions to assign values, i.e. hash values, to every content and every peer in the network, and then follow a global protocol in determining which peer is responsible for which content. This way, whenever a peer wants to search for some data, it can use the global protocol to determine the peer responsible for the data and to then direct the search towards the responsible peer. The term hash value is also referred to as key or index, in particular in the context of managing the distributed content. Correspondingly, the term key space is used for defining the overall set of possible keys. Some known structured peer networks include: Chord, Pastry, Tapestry, CAN and Tulip.

A hash function or a hash algorithm is a reproducible method of turning data, typically a document or file in general into a value suitable to be handled by a computer or any other device. These functions provide a way of creating a small digital "fingerprint" from any kind of data. The hash value is the resulting "fingerprint". The aforementioned hash tables are a major application for hash functions, and enable fast lookup or search of a data record given its hash value.

Considering, for example, a distributed hash table built around an abstract key space, such as the set of 160-bit strings, the ownership of the key space is split among the participating nodes according to a key space partitioning scheme and the overlay network connects the nodes, allowing them to find the owner of any given key in the key space. Once these components are in place, a typical use of the distributed hash table for storage and retrieval might proceed as follows. To store a file with a given filename f1 in the distributed hash table, the hash value of f1 is determined, producing a 160-bit key k1. Thereafter a message *put*(k1, d1), d1 being the physical address, e.g. IP address of the file owner, may be sent to any node participating in the distributed hash table. The message is forwarded from node to node through the overlay network until is reaches the single node responsible for key k1 as specified by the key space partitioning where the pair (k1, d1) is stored. Any other client can then retrieve the contents of the file by again hashing the file name f1 to produce key k1 and asking any distributed hashing table node to find the data associated with k1, for example, with a message *get*(k1). The message will again be routed through the overlay network to the node responsible for key k1, which will reply with the stored data d1. The data d1 itself can be routed using the same route as for the get-message, but typically is transmitted using a different route based on a different physical route the underlying physical network provides.

To enable the above operations distributed hash tables employ a distance function d(k1, k2) which defines an abstract notion of the distance from key k1 to key k2. Each node is assigned a single key, which in the context of routing is also called overlay network identifier. A node with identifier i owns all the keys for which i is the closest identifier, measured according to the distance function d. In other words, the node with the identifier i is responsible for all records or documents having keys k for which i is the closest identifier, measured according to d(i, k).

The Chord DHT is a specific consistent distributed hash table, which treats keys as points on a circle, and where d(k1, k2) is the distance traveling clockwise around the circle from k1 to k2. Thus, the circular key space is split into contiguous segments whose endpoints are the node identifiers. If i1 and i2 are two adjacent node identifiers, than a node with the identifier i2 owns all the keys that fall between i1 and i2.

Each peer maintains a set of links to other peers and together they form the overlay network, and are picked in a structured way, called the network's topology. The links are established toward a small set of remote, see distance function, peers and to a number of the closest peers. All distributed hash table topologies share some variant of the most essential property: for any key k, the node either owns k or has a link to a peer that is closer to k in terms of the key space distance defined above. It is then easy to route a message to the owner of any key k using the following greedy algorithm: at each step, forward the message to the neighbor whose identifier is closest to k. When there is no such neighbor, then the present node must be the closest node, which is the owner of k as defined above. This type of routing is sometimes also called key-based routing.

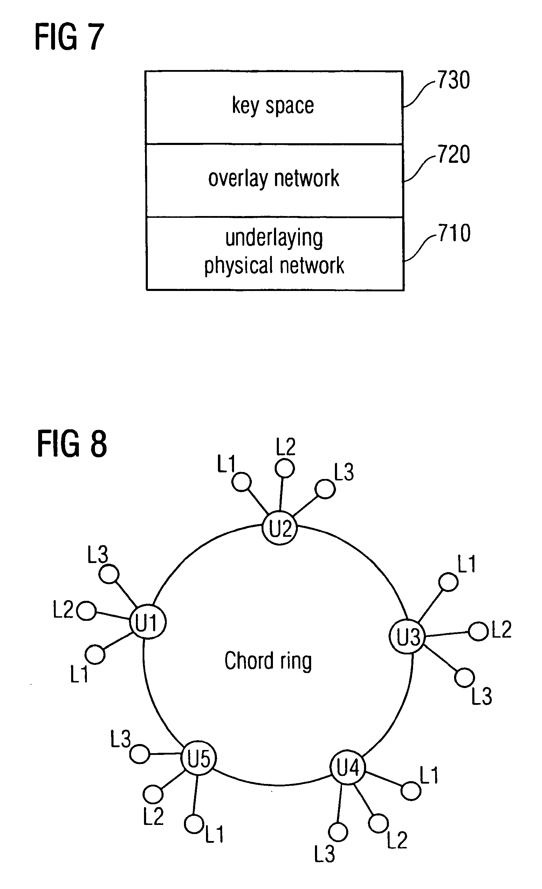

Fig. 7 shows the layered structure of a peer-to-peer overlay network with the underlying physical network 710, the virtual or logical overlay network 720 of the peer-to-peer network on top of the underlying physical network 710, and the key space 730, which is managed by the nodes or peers of the overlay network 720. It should be noted that, for example, for a Chord ring DHT system as described before, the key partitions of the key space 730 are assigned to the peers in a clockwise manner, but this does not mean that for routing purposes the overlay network itself only comprises two overlay links for each node, i.e. the two links to the directly preceding and directly subsequent neighbor nodes according to the Chord ring structure, as will be explained later.

Normally, the keys are assigned to the peers by hashing a peer's IP address and a randomly chosen string into a hash value. A side goal of using a hash function to map source keys to peers is balancing the load distribution: each peer should be responsible for approximately the same number of keys.

To sum up, the specific designs of DHTs depend on the choice of key space, distance function, key partitioning, and linking strategy. However, the good properties related to the efficiency of routing do not come for free. For constructing and maintaining a DHT peers have to deal in particular with the problem of node joins and failures. Since the freedom to choose neighbors in a structured P2P network is constrained, maintenance algorithms are required to reestablish the consistency of routing tables in the presence of network dynamics. Depending on the type of guarantees given by the network different deterministic and probabilistic maintenance strategies have been developed. Maintenance actions can be triggered by various events, such as periodical node joins and leaves or routing failures due to inconsistent routing tables. The different maintenance strategies trade-off maintenance cost versus degree of consistency and thus failure resilience of the network.

However, the current DHT solutions focus only on the fixed internet as the target environments and are not appropriate for mobile computing environments. They do not take into account the main limitations of the mobile devices, such as their low computing and communication capabilities or high communication costs, neither do they consider other specifics of cellular or mobile ad hoc networks. This problem can be addressed by providing a DHT architecture in which the participating peers are divided into two groups, see Fig. 8, where powerful devices are categorized as superpeers $U_1$ to $U_5$, while weaker devices such as mobile phones are called leafnodes $L_1$ to $L_3$. In the distributed hash table according to Fig. 8, the superpeers are organized in a Chord ring as described by I. Stoica, R. Morris, D. Karger, M. Kaashoek, and H. Balakrishnan., "*Chord: A Scalable Peer-to-Peer Lookup Service for Internet Applications*", ACM SIG-COMM Conference, 2001, in the following referred to as [1], and serve as proxies to the leafnodes, which are attached to them and do not participate in the ring.

In the following, a hierarchical peer-to-peer overlay network will be described in more detail based on Fig. 8. As mentioned before, the hierarchical system architecture according to Fig. 8 defines two different classes or hierarchy levels of peers: superpeers and leafnodes. The superpeers, as shown in Fig. 8 establish a structured DHT-based overlay in form of a Chord ring, wherein each, furthermore, acts as a proxy for its leafnodes, i.e. the leafnodes communicate within the peer-to-peer network only via their superpeers, for example for querying a document within the peer-to-peer overlay network. Thus, leafnodes maintain only an overlay connection to their superpeer. To be able to recognize and react to a failure of their superpeer, they periodically run a simple PING-PONG algorithm. Moreover, they store a list containing other available superpeers in the system, in order to be able to rejoin the overlay network after a superpeer failure.

In contrast, superpeers perform multiple other tasks. In one exemplary implementation leafnodes joining the network transfer the lists of pointers to the objects they share to their corresponding superpeers. The superpeers then insert these references into the overlay network and act as their owners. When a leafnode performs a look-up, e.g. queries for an object, the superpeer it is connected to resolves the look-up by using the search functionality of the Chord overlay, determines the responsible superpeer based on the object's key, and forwards the result to the leafnode. In a different implementation the superpeer being responsible for the searched object or document, responds by transmitting the requested document directly to the leafnode, which requested the document, without providing a response to the superpeer acting for its leafnode.

Additionally, since the superpeers establish a conventional Chord ring, they periodically run Chord's maintenance algorithms and refresh periodically all references they maintain in order to keep them up-to-date.

In Zoels S., Despotovic Z., Kellerer W., Cost-Based Analysis of Hierarchical DHT Design, Sixth IEEE International Conference on P2P Computing, Cambridge, UK, 2006, in the following referred to as [9], the following two clear advantages of such a hierarchical system over the traditional flat DHT organizations were demonstrated.

First, the maintenance traffic is substantially reduced. This traffic is necessary when nodes join and leave the system in order to keep the routing tables consistent, as described previously. In the architecture as described in [9], almost no maintenance traffic is necessary when leafnodes leave the system. At the same time, the traffic needed to maintain the Chord ring itself is also reduced because superpeers are selected from nodes with higher online times.

Second, as described in [9], the total operation cost of the network is reduced as the nodes or peers for which communication is more expensive perform less traffic.

In recent years many algorithms have been proposed that aim at balancing the load that is generated in a DHT uniformly over the participating peers. Normally the term "load" here refers to the amount of data items being stored at a peer. The goal of such load balancing algorithms always is to assign an equally-sized partition of either the identifier (ID) space or the number of documents stored in the DHT, to every participating peer. The concept of virtual servers as described by Rao A., Lakshminarayanan K., Surana S., Karp R. and Stoica I., "Load Balancinig Structured P2P Systems", International Workshop on Peer-to-Peer Systems (IPTPS ' 03, Berkely, USA, 2003, in the following referred to as [2], is based on the management of multiple partitions of the ID space at every participating peer. Consequently, one peer represents multiple "virtual servers", where each of them acts as an independent peer in the DHT. Those virtual servers can then be shifted from heavy-loaded to light-loaded peers, corresponding to one LEAVE and one JOIN event in the DHT. The authors show that their algorithm balances the load within 95% compared to the optimal value.

The algorithm as described by Byers J., Considine J., and Mitzenmacher M., "Simple Load Balancing for DHTs", International Workshop on Peer-to-Peer Systems (IPTPS '03), Berkeley, USA, 2003, in the following referred to as [3], is based on the "power of two choices" paradigm, proposed by Mitzenmacher et. al in "The Power of Two Random Choices": A Survey of Techniques and Results, Kluwer Academic Publishers, Norwell, 2001, pages 255-312, in the following referred to as [4]. Whenever a document is inserted into the DHT, d hash functions are used to calculate d different IDs of the shared document, with $d \geq 2$. Then, the responsible peers for the d calculated IDs are contacted in parallel, and the document is stored at the peer with the currently lowest load. In addition, the authors propose to store a so-called redirection pointer to that peer on every other responsible peer. This procedure reduces signaling overhead during document lookups, as any of the d hash functions can be used to find and contact a responsible peer, which then redirects the query to the peer storing the requested document.

In "A Thermal-Dissipation-based Approach for Balancing Data Load in Distributed Hash Tables", IEEE Conference on Local Computer Networks (LCN 2004), Tampa, USA, 2004, in the following referred to as [5], Rieche et al. present an algorithm that balances load in a DHT similar to the process of heat dispersion. They require managing of every interval of the ID space by a minimum number of f and a maximum number of 2 f peers. Each of these peers store all documents assigned to the interval. Load balancing can now be done in three different ways. First of all, if an interval is managed by 2 f peers, and the peers are heavy-loaded, the interval is halved. Both halves are then assigned to the peers $(1, ..., f)$ and the peers $(f + 1, ..., 2 f)$, respectively. Consequently, the involved peers lose half of their data load. Secondly, if an interval is managed by more than f but less than 2 f peers, peers of that interval can be moved to other, heavy-loaded intervals, which in turn can be split according to the above procedure. Thirdly, if an interval is managed by not more than f peers, the borders of the interval may be shifted so that the load is balanced between the peers of neighboring intervals. The authors show that this algorithm performs even better than the algorithms mentioned above, i.e. "virtual servers" [2] and "power of two choices" [3].

Karger and Ruhl "Simple Efficient Load Balancing Algorithms for Peer-to-Peer Systems", International Workshop on Peer-to-Peer Systems (IPTPS '04), San Diego, USA, 2004, in the following referred to as [6], propose two algorithms for balancing the distribution of the ID space and for balancing the distribution of shared documents, respectively, in a Chord overlay. For ID space balancing they assign multiple positions of the ID space, so-called "virtual nodes", to every peer, but choose only one of those virtual nodes to become active at the same time. From time to time, each peer determines its virtual node that manages the smallest partition of the ID space, and activates that virtual node. For document balancing they occasionally compare the load of peer $p_i$ with the load of another, randomly chosen peer $p_j$.

If load balancing between $p_i$ and $p_j$ is necessary, $p_j$ changes its position in the ID space so that is located between $p_i$ and its predecessor, and therefore captures half of $p_i$'s items.

Kenthapadi and Manku try in "Decentralized Algorithms using both Local and Random Probes for P2P Load Balancing", ACM Symposium on Parallelism in Algorithms and Architectures (SPAA05), Las Vegas, USA, 2005, in the following referred to as [7], to balance the load in a DHT by dividing the ID space into equally-sized partitions. Their goal is to minimize the ratio σ between the largest and the smallest size of a partition. Therefore, they focus on joining peers and, on every join, select r random points in the DHT, for which they inspect the sizes of v partitions proximate to each random point. Then the joining peer splits the largest partition encountered in half. The authors show that for any r and v satisfying $r \cdot v \geq c \log_2 k$, where $c$ is a small constant and $k - 1$ is the number of peers in the DHT before the $k^{th}$ peer joins, the ratio σ is at most 8, with high probability.

US 2003/055892 A1 describes a serverless peer-to-peer group management and maintenance. Group formation and discovery of private, public, and enumerated groups are described, as is a method of joining such a peer-to-peer group. Group information management ensures that each node maintains a current database from the initial joining of the group through the run phase of membership. Group graph maintenance utilizes a group signature to ensure that partitions in the graph may be detected and repaired. The utility of connections within the graph is also monitored so that non-productive connections may be dropped to increase the efficiency of the group. The diameter of the graph is also monitored and adjusted to ensure rapid information transfer throughout the group. A disconnect procedure is used to maintain the graph integrity and prevent partitions resulting from the departure of a group member.

Within US 2003/055892 A1 "groups" are connections of peers with a mutual agreement to dispute one or more types of information. Three types of group discovery are distinguished: discovery of a private group, discovery of a public group and enumeration of a group hierarchy, i.e. a peer wants to browse a list of groups. Groups may establish parent-child relationships with other groups to create hierarchies. Group hierarchies allow groups to organize themselves, solely to simply group discovery and enumeration. Furthermore, "graph maintenance" is based on three parameters (minimum number of neighbors, maximum number of neighbors and ideal number of neighbors). Based on these parameters, the peer decides whether to initiate new connections in a given group and whether to accept connection requests. Furthermore, the actual value or "usefulness" of a given neighbor is also assessed based on a utility index U(X). Therefore, when a peer decides to drop a connection, it can choose to disconnect from the neighbor that has a lesser or lower utility index.

US 2005/086288 A1 describes a peer-to-peer relay network including a plurality of N peer systems, wherein each peer system is connected to a number of other peer systems that is less than or equal to a connection limit, said connection limit is greater than or equal to, N-1, and each peer system is configured to relay data to peer systems connected to that peer system according to a set of one or more relay rules. Furthermore, the peers select peers based on the speed of their response or other characteristics such as storage capacity, processing speed, access levels, or available functions.

All of the above algorithms focus on so-called flat DHT design, i.e., DHT design in which all nodes are functionally the same. Consequently, they all opt to balance load by selecting how many documents are in a peer's responsibility.

The decision on this is made either at the document insertion phase or during the normal operation of the system (query phase). The proposed system architecture for inhomogeneous networks is, however, not flat. On the contrary, it is hierarchical with top-level superpeers and leaf nodes attached to them.

It is the object of the present invention to provide an apparatus and a method for efficient load balancing in a hierarchical peer-to-peer system.

The object is achieved by a superpeer capable of supporting load balancing in a hierarchical peer-to-peer system according to claim 1, a method for operating a superpeer capable of supporting load balancing in a hierarchical peer-to-peer system according to claim 10 and a computer program according to claim 11.

The invention provides a superpeer capable of supporting load balancing in a hierarchical peer-to-peer system, operative to set-up a superpeer overlay network (N1) of a hierarchical peer-to-peer system with one or a plurality of other superpeers, to which a leafnode can be attached via a leafnode overlay link with any of said superpeers, said superpeer comprising: a receiver operative to receive an attach request message indicating that said leafnode is requesting to be attached to said hierarchical peer-to-peer system; a transmitter operative to transmit and attach confirmation message; and the processing unit, operative to, upon reception of an indication from said receiver that an attach request message has been received, compare a traffic load value of said superpeer with a traffic load value associated with said other superpeer or with traffic load values of several superpeers, wherein each of said several superpeers is associated with a load traffic value, which is specific to said superpeer, and to control said transmitter to transmit said attach confirmation message to indicate that said leafnode is to be attached to said hierarchical peer-to-peer system through a leafnode overlay link with said superpeer, if the traffic load value of said superpeer is lower than or equal to said traffic load value of said other superpeer or lower than or equal to a minimum traffic load value of the traffic load values associated to said several superpeers.

The invention provides, furthermore a method for operating a superpeer, which is operative to set-up a superpeer overlay network of a hierarchical peer-to-peer system with one or a plurality of other superpeers, to which a leafnode can be attached via a leafnode overlay link to any of said superpeers, said method comprising the following steps: receiving an attach request message indicating that said leafnode is requesting to be attached to said hierarchical peer-to-peer system; comparing a traffic load value of said superpeer with a traffic load value associated with said other superpeer or with traffic load values of several superpeers, wherein each of said several superpeers is associated with a load traffic value, which is specific to said superpeer; and transmitting an attach confirmation message to indicate that said leafnode is to be attached to said hierarchical peer-to-peer system via a leafnode overlay link with said superpeer, if the traffic load value of said superpeer is lower than or equal to the traffic load value of said other superpeer or lower than or equal to a minimum traffic load value of traffic load values associated to said several superpeers.

Finally, the present invention provides a computer program having a program code for performing the inventive method, when the program runs on a computer.

The present invention is based on the finding that the hierarchical peer to peer network offers one more possibility for load balancing: as leafnodes join the network, they can be assigned to different superpeers as to balance the load generated among the superpeers. This is an important difference between the inventive solution and the load balancing schemes as they have been described previously for flat peer-to-peer systems. It is further emphasized that embodiments of the inventive solution are orthogonal to the existing ones, as they can work together with any of them, rather than competing with them, as will be described later.

The present invention is furthermore based on the finding that the definition of load as defined by the previously described load balancing schemes for flat peer-to-peer systems is to a certain degree misleading in all of them. There, the number of documents a peer is responsible for is used to define the peer's load. However, this does not reflect, for example, how often certain documents are requested, and, thus, does not reflect this kind of load distribution, nor does this definition reflect that in a hierarchical peer to peer system, all queries from and to leafnodes are routed via the superpeer being responsible for those leafnodes. This increases further the load of the respective superpeers and is not taken into account by determining the load based only on the number of documents or keys. Therefore, according to the invention the load is defined as the number of messages peers forwarded during network operation, i.e. the traffic load. Equivalent to the number of packets also other traffic measures like bit/s can be used as traffic load metric to also take into consideration that the size of the packets may differ.

This new traffic oriented metric for load balancing can also be used for the load-balancing solutions discussed for flat peer to peer systems. Instead of maintaining the number of documents the peers can store, every peer just needs to maintain the information about its traffic. This information can then be used to make decisions in accordance to the aforementioned algorithms.

The superpeers can also be referred to as first level peers because they belong to a first hierarchy level of the peer-to-peer system, and the leafnodes can also be referred to as second level peers, because they belong to a second hierarchical level of the hierarchical peer-to-peer system. Thus, despite the term "node" the leafnode is also a peer of the hierarchical overlay peer-to-peer system, although the leafnode itself is not responsible for a key space partition or for routing like the superpeers.

As mentioned before, load balancing is an important issue in peer-to-peer systems. Evenly balanced load among peers enables better operation of the network by reducing the peer failure probability and increasing the network stability. Most of the current solutions to the problem focus on load balancing when inserting documents into the system and/or their shifting when load is skewed, as described previously. The hierarchical system architecture provides another possibility, which embodiments of the present invention make use of. The hierarchical architecture has two classes of peers: superpeers and leafnodes. The load balancing solution used by embodiments of the invention dynamically assigns leafnodes to different superpeers as to balance the traffic load among the superpeers. The way it is done is as follows. The superpeer, for example, receiving a Join Request from a leafnode forwards it to a superpeer from its routing table with the currently lowest load. In a preferred embodiment, any Join Request gets forwarded until a superpeer is found with a lower load than all its fingers, fingers being neighbor superpeers, or a maximum number of forwards are reached.

The same principle can not only be used for load balancing when leafnodes want to join but can also be used to move a leafnode which is already attached to one superpeer, to another superpeer, to perform a load balancing as a maintenance activity.

Simulations have shown that standard deviations of the load across peers stay within a few percent for a broad range of the parameter settings. At the same time, the approach bears exceptionally small additional cost. Stable and less costly network operation as well as higher fault resilience have already been mentioned as the main advantages of embodiments of the proposed load balancing solution. To be more precise, it is important to balance the load among the superpeers in order to improve their stability and lower their failure probability, because when the load is not balanced, then superpeers that are overloaded may reach their communication capacity limits, which may lead to an inconsistent operation of the network, i.e. messages can be dropped frequently. A more severe consequence may be the failure of overlay nodes and in particular a failure of superpeers in a hierarchical peer-to-peer-system. In this case, the performance of the entire network degrades, as maintenance algorithms have to be run, to reorganize the network. In an extreme case, the whole network may collapse. To avoid such problems, embodiments of inventive superpeers share the load as evenly as possible. As mentioned before, the main idea of the solution is for leafnodes to get attached to different superpeers according to the superpeers' loading levels.

Preferred embodiments of the present invention are described in detail with respect to the following figures:

Fig. 1      shows a block diagram of an embodiment of an inventive superpeer capable of supporting node balancing in a hierarchical peer-to-peer system;

Fig. 2A      shows a preferred embodiment of the method for load balancing in a hierarchical peer to peer system in the form of pseudo code;

Fig. 2B      shows a flow chart of a preferred embodiment of a method for operating a superpeer capable of supporting load balancing in a hierarchical peer to peer system;

Fig. 3A,B      show an exemplary hierarchical distributed hash table system, wherein the superpeers form a Chord ring;

Fig. 4      is a diagram showing the dependence of the standard deviation of the traffic loads against the total number of leafnode joins when superpeer keys are randomly selected superpeer keys;

Fig. 5      is a diagram showing the dependence of the standard deviation of the traffic loads against the total number of leafnode joins when superpeer keys are evenly spread;

Fig. 6      is a diagram showing the dependence of the standard deviation of the traffic loads against the fix fingers period length;

Fig. 7      shows an exemplary layered structure of a peer-to-peer overlay network and its underlying physical network; and

Fig. 8      shows a possible hierarchical peer-to-peer system comparing the superpeers form per quartering and an equal number of leafnodes is attached to each superpeer.

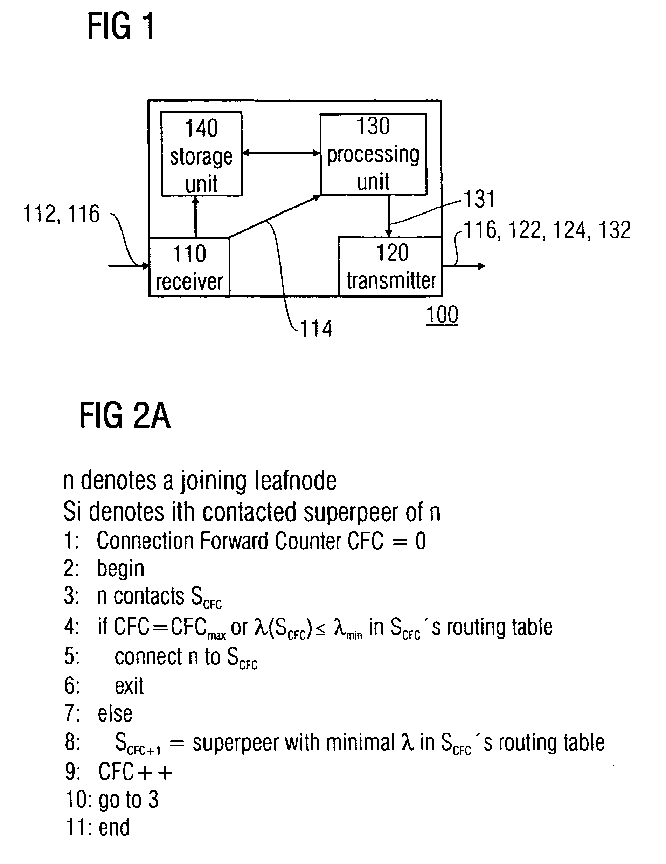

Fig. 1 shows an embodiment of a superpeer capable of supporting load balancing in a hierarchical peer to peer system that is operative to set-up a superpeer overlay network of a hierarchical peer-to-peer system with one or a plurality of other superpeers, to which the leafnode can be attached via a leafnode overlay with any of the superpeers. The superpeer overlay network is formed by superpeers and comprises at least two superpeers as otherwise no load balancing between superpeers would be possible. The leafnodes are only connected to the peer-to-peer system via one of the superpeers. Therefore also the term "proxy" is used for the superpeers. The superpeer 100 comprises a receiver 110, a transmitter 120, a processing unit 130, and a storage unit 140. The receiver 110 is operative to receive an attach request message 112 indicating that a leafnode is requesting to be attached to the hierarchical peer-to-peer system via one of the superpeers. The term "attach" is used in the sense of "connect".

An attach request message may have been transmitted by the leafnode itself, for example, in case the superpeer is the superpeer the leafnode is contacting directly, or may have been transmitted by another superpeer.

In one embodiment, the processing unit 130 is operative, upon reception of an indication 114 from the receiver 110 that an attach request message 112 has been received, to compare a traffic load value of the superpeer 100 with traffic load values of other superpeers. To be more precise, the embodiments of hierarchical peer to peer systems comprise two or more superpeers and accordingly, the processing unit 130 of superpeer 100 compares the own traffic load value with the traffic load value associated with the other superpeer, in case of two superpeers, or with the traffic load values of several superpeers in case the peer to peer system comprises a plurality of superpeers besides superpeer 100.

The transmitter 120 is operative to transmit an attach confirmation message 124.

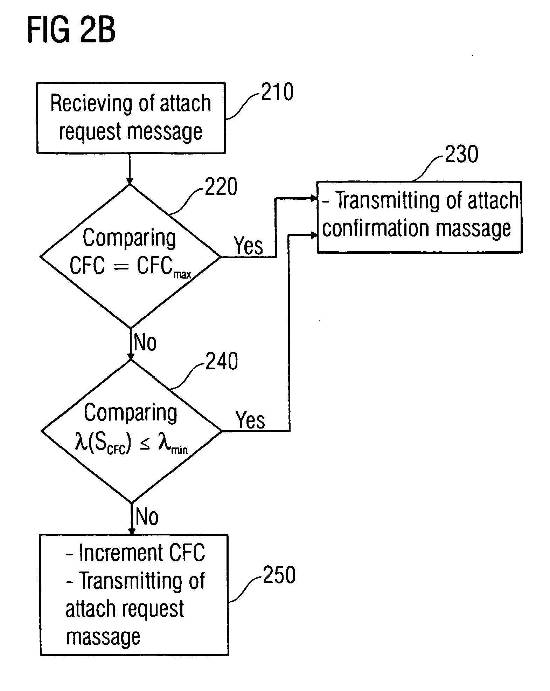

The processing unit 130 is operative upon reception of an indication 114 from said receiver 110 that an attach request message 112 has been received, to determine whether to attach the leafnode or whether to forward the request to another superpeer. The determination process will be discussed in detail based on Figs. 2A and 2B. In one embodiment the processing unit 130 compares a traffic load value of the superpeer 100 with a traffic load value associated with the other superpeer or with the traffic load values of several superpeers, wherein each of the several superpeers is associated with a load traffic value, which is specific to the respective superpeer. The processing unit 130 is further operative to control the transmitter 120 to transmit an forward attach confirmation message 122 to indicate that a leafnode is to be attached to the hierarchical peer to peer system through a leafnode overlay link with the superpeer 100, if the traffic load of the superpeer 100 is lower than or equal to the traffic load of the other superpeer or lower than or equal to a minimum traffic load of the traffic loads associated to the several superpeers.

The traffic load may be represented by traffic load values, e.g. the number of packets per time interval or bits per second. In this case, embodiments of the processing unit are operative to control the transmitter 120 to transmit the forward attach confirmation message 122, if the traffic load value of the superpeer 100 is lower than or equal to the traffic load value of the other superpeer or lower than or equal to a minimum traffic load value of the traffic load values associated to the several superpeers.

In alternative embodiments, the processing unit can be operative to use, e.g. the inverse values of the aforementioned traffic load values as traffic load values. Correspondingly, in this case embodiments of the processing unit are operative to control the transmitter 120 to transmit the forward attach confirmation message 122, if the traffic load value of the superpeer 100 is higher than or equal to the traffic load value of the other superpeer or higher than or equal to a maximum traffic load value of the traffic load values associated to the several superpeers.

In the following embodiments using the number of packets per time interval will be used as exemplary traffic load values without narrowing the scope of the invention.

Therefore, in a further embodiment, the superpeer 100 is operative to, if the load traffic value of the superpeer 100 is higher than the load traffic value of the other superpeer or higher than the minimum load traffic value of the several other superpeers, control 131 transmitter 120 to transmit, i.e. forward, a forward attach request message 122 to the other superpeer or to that superpeer of the several superpeers to which the minimum load traffic value is associated to.

In a preferred embodiment, as will be explained in more detail based on Fig. 2A, a superpeer 100 additionally checks a connection forward counter associated to the attach request message and does not further forward the attach request message in case the connection forwards counter has reached a certain forward counter threshold. The forward counter is used to avoid loops or an "endless" forwarding of the attach request messages.

In another preferred embodiment, the superpeer also comprises a storage unit 140, operative to store a routing table comprising for the other superpeer or for each of the several superpeers an overlay network identifier, wherein to each superpeer a unique overlay network identifier is assigned to, and wherein the traffic load value associated to the other superpeer or the respective traffic load values are each associated to one or the several superpeers, and wherein said processing unit is operative to use the routing table for the comparing of the traffic load values and the forwarding of the attach request messages.

The traffic load values of the other superpeers may for example be received through explicit maintenance messages or piggybacked on other messages 116. In alternative embodiments, the superpeer may be operative to request the traffic load values of specific superpeers each time it receives an attach request message.

The routing table may comprise all superpeers of the peer to peer system including the respective traffic load values associated to each of them, but typically will only comprise a sub-set of all superpeers, for example, the neighboring nodes and their associated traffic load values, which are also referred to as fingers, to keep the cost of maintenance and the related traffics in acceptable dimensions.

In a further embodiment, the processing unit 130 of a preferred embodiment of a superpeer 100 is operative to monitor and measure the own traffic load and to compare the traffic load value with a given traffic load threshold, and to control 131 the transmitter 120 to transmit a move attach request message 132 to another superpeer to initiate the transfer of a leafnode, which is already attached to the superpeer 100, such that the attached leafnode gets attached to a different superpeer of the plurality of superpeers. Thus, superpeers can also actively balance the load among themselves caused by leafnodes already attached to the peer-to-peer network by moving these leafnodes to or re-attaching these leafnodes at other superpeers.

This monitoring may be performed continuously, may be performed additionally whenever an attach rest message has been received, may be performed periodically or due to per-defined internal or external events.

Thus, referring back to Fig. 1, the following cases or attach request message types may be distinguished: a) a leafnode transmits a join attach request message directly to a superpeer, i.e. initiates a join request; b) a superpeer transmits a move attach request message 132 to another superpeer, i.e. initiates a move request; and c) a superpeer transmits a forward attach request message 122, i.e. forwards one of the aforementioned requests.

Independent of the origin of message, i.e. join request or move request, and the type of message, the generation of the individual messages and the handling or processing of received messages may be performed in the same or at least similar manner, e.g. with or without incrementing and checking a forward counter or comparing load traffic values and deciding whether to attach the leafnode, i.e. generate the attach confirmation message 124, or to forward the request, i.e. generate the attach request message 122, to a next superpeer. The same is valid for how the superpeer decides to which next superpeer the forward attach request message shall be transmitted to.

Thus, for example, in an embodiment of a superpeer, the processing unit 130 is - also for move requests - operative to compare the traffic values of the other superpeers and to control 131 the transmitter 120 to transmit the attach request message 124 to that superpeer of the several superpeers which has the lowest traffic load value of all.

In other embodiments, these message types may be distinguished and also be processed in a different manner.

Based on an implementation without forward attach request messages 122, the leafnode requesting to join the peer to peer network or another superpeer requesting to move one of its attached leafnodes has to transmit itself further attach request messages, i.e. join or move attach request messages, until one of the superpeers confirms the request with an attach confirmation message 124.

For implementations with forward attach request messages, a forward attach request message is "forwarded", so that neither a leafnode requesting to join nor a superpeer requesting a move do not have to repeat the transmision of the respective attach request messages as it would be necessary in the aforementioned embodiment without forwarding capability of the superpeer.

The transmitted forward attach request message 122 may have the same format as a received attach request message 112, e.g. in case no forward counter is applied only the routing information is changed, or in case a forward counter is applied the forward counter is additionally incremented, or may be different to it. In any case the transmission due to the reception of a request from another superpeer is also referred to as "forwarding" the request.

In the following an embodiment of the method for loadbalancing in hierarchical peer-to-peer networks is described in more detail. First, the superpeers-load level is defined as the quantity or metric to be balanced. A load level $\lambda$ of a superpeer specifies how much load the superpeer currently bears at any time:

$$\lambda_i(t) = \frac{\text{number of sent messages of superpeer } i \text{ at time } t}{t}$$

The superpeers constantly calculate their current load level $\lambda$. Moreover, they exchange this information as a piggyback information in every routing table update message, e.g. the Fix Finger messages, in a Chord overlay. Consequently, superpeers always know the load levels of all $\log_2 N_{SP}$ entries in their routing table ($N_{SP}$ is the number of superpeers in the DHT), without generating additional network traffic. The problem of a load-balancing algorithm is now to provide equal load levels for all superpeers in the system with minimum effort.

The load-balancing algorithm described in more detail in the following focuses on leafnodes that are joining the overlay network. However, it is obvious to a person skilled in the art that the same node balancing algorithm can also be applied in cases where leafnodes, which are already attached to one superpeer, will be moved to another superpeer, to reduce the load of that specific superpeer, the leafnode is currently attached to. The difference basically only lies within the origin or reason for the transmission of the attach request message. The handling of the attach request message by the receiving superpeer can be implemented in the same way.

Whenever a leafnode is joining the overlay network, the initially contacted superpeer forwards the Join Request to the superpeer with the lowest load level $\lambda$ in its routing table. This forwarding of the Join Request continues until a superpeer i is found with a load level $\lambda_i$ that is smaller than all load level entries in i's routing table or the maximum forwarding count is reached. Hence, the joining leafnode is connected to superpeer *i*.

An embodiment of the algorithm is shown in Fig. 2A in the form of pseudo code, wherein n denotes a joining leafnode, $S_i$ denotes the $i^{th}$ contacted superpeer of leafnode *n*.

In line 1 the connection forward counter CFC is set to 0. In line 2, the algorithm starts. In line 3 leafnode n contacts $S_{CFC}$, i.e. for CFC = 0 the leafnode contacts the first superpeer, and for CFC > 0 line 3 indicates that the attach request message has been forwarded to a next superpeer, as can be seen from line 10, defining a loop back to line 3. In line 4, the connection forward counter value CFC is compared to a maximum connection forward counter value $CFC_{max}$, also referred to as connection forward counter threshold, and the traffic load value $\lambda(SFC)$ of the superpeer having received the attach request message is compared with the traffic load values of other superpeers, which are stored in the routing table. In case the connection forward counter CFC is equal to the connection forward counter threshold $CFC_{max}$ or the traffic load value $\lambda(S_{CFC})$ of the superpeer is smaller or equal to a minimum traffic load value $\lambda_{min}$ of the traffic load values contained in the routing table, the leafnode n is connected, i.e. attached, to the current supernode $S_{CFC}$ as described in line 5, and the algorithm is terminated, as described in line 6. If neither of the two conditions is met, the algorithm jumps to line 7 and 8, where the superpeer with the minimal traffic load value $\lambda$ in the routing table of the present superpeer $S_{CFC}$ is selected as the next superpeer $S_{CFC+1}$ and the attach request message is routed to that next superpeer. In line 9 the connection forward counter CFC is incremented before in line 10 the algorithm returns to line 3.

In short, the algorithm can be described as: forward the join request of a leafnode until a superpeer is found having a smaller load than all its fingers, i.e. neighbors, or the maximum forward count is reached.

Fig. 2B shows a preferred embodiment of the method for operating the superpeer as flow chart. In step 210, the superpeer 100 receives the attach request message. In step 220, the supernode 100 compares the connection forward counter CFC with the connection forward counter threshold $CFC_{max}$, and in case the connection forward counter CFC is equal to the connection forward counter $CFC_{max}$ the supernode 100 transmits an attach confirmation message 124 to confirm that the leafnode is to be attached to the supernode 100. In case the connection forward counter CFC is not equal to, i.e. is lower than the connection forward counter $CFC_{max}$, the method proceeds to step 240, where the traffic load value $\lambda(S_{CFC})$ is compared with the traffic load values in the routing table of superpeer 100. In case the traffic load value $\lambda(S_{CFC})$ of the superpeer 100 is smaller or equal to the minimum traffic load value $\lambda_{min}$ of all traffic load values contained in the routing table the method proceeds to step 230, transmitting the attach confirmation message. In case the load traffic value $\lambda(S_{CFC})$ is higher than the minimum load traffic value $\lambda_{min}$ the method proceeds to step 250, incrementing the connection forward counter CFC and transmitting, i.e. forwarding, the attach request message 122 to the next superpeer to which the minimum threshold value $\lambda_{min}$ is associated to.

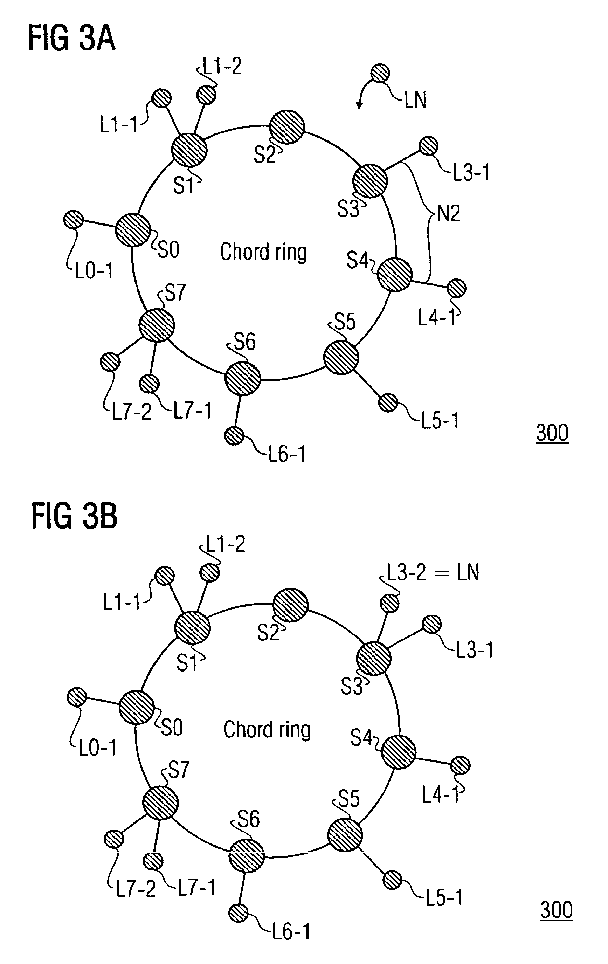

Fig. 3A shows an exemplary embodiment of hierarchical peer-to-peer system with 8 superpeers S0 to S7 forming a DHT Chord ring. Fig. 3A shows a scenario, where superpeer S0 has one leafnode L0-1, superpeer S1 has two leafnodes L1-1, L1-2, superpeer S2 has no leafnode, superpeer S3 has leafnode L3-1, superpeer S4 has leafnode L4-1, superpeer S5 has leafnode L5-1, superpeer S6 has leafnode L6-1, and superpeer S7 has leafnodes L7-1 and L7-2 attached to it. N1 symbolizes the superpeer overlay network or first hierarchical level overlay network formed by the superpeers and N2 refers to samples of leafnode overlay links or second hierarchical level overlay links to attach leafnodes to their respective superpeers. With regard to the embodiment shown in Fig. 3A it is furthermore assumed that the key space is defined from 0 to 799 and that the keyspace is partitioned in an equidistant manner between the superpeers and that the overlay network identifiers of the 8 superpeers correspond to the key values. In other words, according to the Chord ring structure, superpeer S0 has the overlay network identifier 0, which, as defined above, also corresponds to the key value 0, superpeer S1 has the overlay network identifier 100, super request 2 has the overlay network identifier 200, superpeer S3 has the overlay network identifier 300, superpeer S4 has the overlay network identifier 400, superpeer S5 has the overlay network identifier 500, superpeer S6 has the overlay network identifier 600, and superpeer S7 has the overlay network identifier 700. According to the Chord ring structure superpeer S1 is responsible for the key partitions 1 to 99, superpeer S2 for the key partitions 100 to 199, etc. Thus, the Chord ring as shown in Fig. 3A represents the block wise partition of the Chord ring system and also the - in general - clockwise routing concept. However, it should be noted that, referring back to Fig. 7, the routing itself may be performed in various ways and is not necessarily limited to the ring-structure as depicted in Fig. 3A. In one embodiment the routing can be limited such that each superpeer only routes to its clockwise or counterclockwise direct neighbor, for example, superpeer S2 would only route to superpeer S1 or superpeer S3. However, in preferred embodiments, the routing table of superpeer S2 would also contain further superpeers. In one typical example the routing table of superpeer S2 would additionally - for resilience reasons - comprise the overlay network identifiers of superpeer S0 and superpeer S4 as its direct neighbors' direct neighbors, for example in case of a failure or departure of one of the direct neighbors superpeer S1 or superpeer S3. In other embodiments the routing table of superpeer S2 can also include the network identifier if superpeer S7. The various possibilitites to set up routing tables are known to a person in skilled in the art and are, therefore, not described in further detail.

Fig. 3A shows in particular the situation, where a new leafnode LN wants to join the peer-to-peer network.

When a new leafnode LN wants to join the peer-to-peer network, the new leafnode LN would transmit, as explained based on Figs. 2A and 2B, an attach request message in form of a join request message, for example, to superpeer S2.

Superpeer S2 would then compare its own traffic load value with the traffic load values of its routing table, for instance, comprising the traffic load values of neighboring superpeers S0, S1, S3, and S4. Based on the aforementioned comparison the superpeer S2 would then decide whether to attach the new leafnode LN to itself or to transmit a attach request message to that superpeer, the minimum traffic load value is associated with.

In case the own traffic load value of superpeer S2 is lower than or equal to each of the load traffic values of superpeers S0, S1, S3, and S4, the new leafnode LN would be attached to superpeer S2.

In case, for example, superpeer 3 has the lowest traffic load value of the superpeers S0, S1, S3, S4 and the traffic load value of superpeer S2 is higher than the minimum traffic load value which is associated with superpeer S3, superpeer S2 will forward the attach request message of the new leafnode LN to to superpeer S3.

Superpeer will perform the same steps as superpeer S2. In case, for example, the own traffic load value of superpeer S3 is lower than or equal to the traffic load values of superpeers S1, S2, S4, S5 it will determine to attach the new leaf node to itself and transmit an attach confirmation message to the leafnode LN accordingly, as shown in Fig. 3B.

Typically, mobile peer-to-peer networks comprise peers of different performance, i.e. of different processing power or bandwidth. Therefore, in preferred embodiments each superpeer not only measures its actual absolute load traffic value, but also determines a relative load traffic value for the comparison of the load traffic values as explained based on Figs. 2A and 2B. For this implementation, depending on the individual capabilities of each peer a maximum load traffic value is associated with each peer. Thus, the relative load traffic value can, for example, be determined as the ratio between actual absolute traffic load value and the maximum traffic load value. Thus, the different individual capabilities of the peers are taken into account when distributing the load.

In case, for example, superpeer S2 receives the same number of queries as superpeer S3 but is not as performant as superpeer S3, i.e. would have a lower maximum traffic load value, the relative load traffic value of superpeer S2 would be higher than the relative traffic load value of superpeer 3, and therefore would route the attach request message of the new leafnode LN to superpeer S3 (in case superpeer S3 has the lowest relative traffic load value of the superpeers S0 to S4). The implementation of the load-balancing scheme is independent of whether the absolute or any relative load traffic value is used.

Fig. 3B shows the hierarchical peer-to-peer overlay network of Fig. 3A after the new leafnode LN has been attached to superpeer S3 as leafnode L3-2.

In contrast to load-balancing schemes with the objective to equally distribute the number of leafnodes among the superpeers, embodiments for loadbalancing according to the present invention base their decision on the traffic load values. Thus, embodiments of the present invention might lead to an equal distribution of leafnodes to superpeers, for example, in the rather theoretical case that all leafnodes and all superpeers initiate or have to handle the same number of queries and routings. However, in real network environments, this is typically not the case, and therefore embodiments of the invention will typically not lead to a peer-to-peer system, where the number of leafnodes is equally distributed to each superpeer.

In the following, the results of a set of simulations, which were performed to measure the quality of the approach are presented. A simulator was implemented in the software package Mathematica. This is an event driven simulator. Events generated during a network operation are recorded in a globally maintained event queue and processed at their occurrence time via event handlers. Every event has a type, e.g. simple routing message, query, leaf join, etc. and a target, i.e. the node handling the event. The event occurrence times are driven by the latency among the nodes. For example, when a node routes a message to a neighbor as a result of processing an event of a considered node, then a new event for the neighbor is generated and its time equals the current time plus a latency between the two nodes.

The typical simulation run consists of the following two phases: the initialization phase and the query phase. In the initialization phase a Chord network was set-up (without any leaves) and a number of keys to be queried in the query phase were inserted. The key length was kept constant at 20 bits throughout the simulations. The network was never fully populated, i.e. the number of peers was always far below $2^{20}$. The overlay network identifiers (ID) of the peers were generated in two ways: at random, as usual in DHTs, and equally spread, i.e. given N peers in the network the ID of the $k^{th}$ peer is the closest integer to $k/N*2^{20}$. Routing tables in a Chord network can be constructed in two ways. First, the $i^{th}$ entry in the routing table of a node with the ID k points to the node who's ID is closest to $k+2^i$. Second, the $i^{th}$ entry points to a randomly selected node in the interval $(k+2^i, k+2^{i+1})$.

The second strategy to construct the network was chosen, the reason is that with this strategy routing tables contain more distinct nodes, which impacts the quality of the proposed load balancing algorithm.

The query phase consists of the following two interleaved sub-phases: leafnode joins and queries from various nodes. Leaf arrivals are generated as a Poisson process at a specific rate. At any arrival time the peer to join the network is selected randomly from the set of all offline leaves at that time. Leaf online times (time elapsing since the peer joins the network until it leaves it) are drawn at random from the interval [5, 10] minutes. Query times are generated for each node separately, again as Poisson processes with selected rates. Thus every leaf is characterized by its query times and its online time. The key to be queried is drawn uniformly at random from the set of all keys stored in the network. This means that skewed query distributions were not considered in the simulations. For leaves, query rates are uniformly distributed in the interval [1/60, 1/20] (from one up to three queries per minute) in one simulation set and [1/120, 1/80] in the other.

To maintain the load of the nodes, a list of sent messages was maintained for each node. Whenever a node sent a message, the time when the message sent to the node's traffic list was appended. The load of any node at any time was obtained as the length of its traffic list divided by the time. In this way, it was possible to accurately maintain a measure of the load. As the quality measure the standard deviation of the loads across the peers was measured. More precisely, to deal with an absolute scale, the loads were normalized with the maximum load. Thus, the sequence of normalized loads in the interval [0, 1] was obtained.

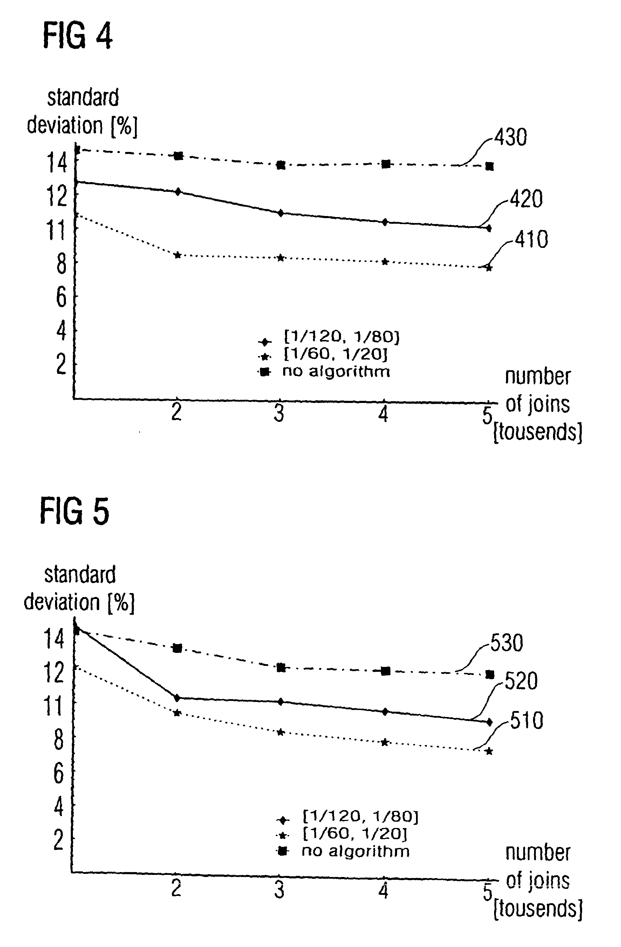

Fig. 4 plots the standard deviation of the loads against the total number of leafnode joins (x-axis) for the following three cases: the above algorithm with randomly selected superpeer keys and two different query rates of the leafnodes and no algorithm at all (attaching leafnodes to superpeers randomly). The number of superpeers was kept constant at 1000. Thus, also the dependence of the load balancing quality on the leafnodes to superpeers ratio was measured. Or precisely, the figure depicts results of the following scenario: from a sufficiently large pool of leafnodes 5000 joins (x-axis) were generated sequentially and the standard deviation (y-axis) of the load after 25, 50, 75, and 100 % of these joins have been performed was measured. Plot 410 shows the evolution of the standard deviation for query rates in the interval [1/120, 1/80], plot 420 shows the evolution of the standard deviation of the superpeers traffic load values for query rates in the interval [1/60, 1/20] and plot 410 shows the evolution of the standard deviation for the low traffic value of the superpeers with no algorithm as benchmark for the performance of the proposed algorithm. It is clear that the deviation is a decreasing function of the leafnode population size, given a total number of the superpeers, one can better balance the load for higher numbers of leafnodes.

Fig. 5 shows the results from the same setting with only one change: an even distribution of the superpeer keys was assumed.

The results from Figs. 4 and 5 hold if the nodes instantaneously observe loads of their fingers, i.e. their neighbors. However, this is not realistic because the only way for the nodes to learn about their fingers' load is to periodically exchange this information with them.

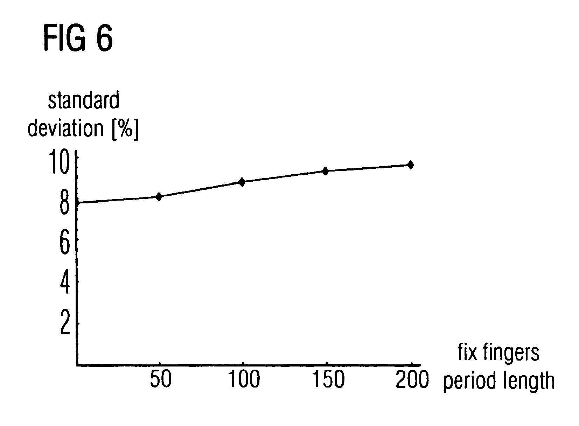

In Fig. 6, it is presented how the standard deviation depends on the length of this period, i.e. the fix fingers period length (in seconds). The fix fingers periods were varied from 0 to 200 seconds (x-axis). The number of superpeers was 1000 and the results were taken after 5000 joins have been observed in the system. The diagram clearly shows that the standard deviation increases slightly with increasing fix fingers periods.

Summarizing the aforementioned, peer-to-peer (P2P) networks are self-organizing, distributed overlay networks enabling a fast location of a set of resources. They are realized as application layer overlay networks relying on whatever physical connectivity among the participating nodes. The basic problem addressed by a P2P network is self-organized distribution of a set of resources among a set of peers enabling their subsequent fast lookup.

A promising approach to solve this problem is the concept of structured P2P networks, also known as Distributed Hash Tables (DHT). In a DHT peers collaboratively manage specific subsets of resources identified by keys from a key space. This is done in the following way. Each peer is associated with a key taken from the key space. Given the set of peers, the key of each peer is associated with a partition of the key space such that the peer becomes responsible to manage all resources identified by keys from the associated partition. Typically the key partition consists of all keys closest to the peer key in a suitable metric. The closeness of keys is measured by a distance function. To forward resource requests, peers form a routing network by taking into account the knowledge on the association of peers with key partitions. Peers typically maintain short-range links to all peers with neighboring keys and in addition a small number of long-range links to some selected distant peers. Using the routing network established in this way peers forward resource requests in a directed manner to other peers from their routing tables trying to greedily reduce the distance to the key being looked up. Most of DHTs achieve by virtue of this construction and routing algorithms lookup with a number of messages logarithmic in the size of network by using routing tables, which are also logarithmic in the size of the network.

The peer-to-peer architecture which was considered divides the participating peers into two groups: superpeers, which are organized in a distributed hash table (DHT) and serve as proxies to the second group, the leafnodes, which are attached to them and don't participate in the DHT.

After having described the system architecture the problem solved by embodiment of the invention was described. How can the load among the superpeers be distributed such that every superpeer takes approximately an equal portion of the traffic generated by the network operation? It was first elaborated on why is this important at all. It is important because unbalanced load can cause overloaded peers to fail. This, of course, introduces new overhead for the system as maintenance and failure recovery algorithms have to be run. In the most extreme scenario, the entire system can tear down as peer failures can have a cumulative effect. Is the problem relevant in the sense that the load can be so seriously skewed that we need an algorithm on its own to flatten it? Normally, the peer keys are selected at random from the key space at the peer startup phase. The system size is always smaller than the key space size because the same key space is used to index documents present in the system and their number is much higher than the number of peers. So, the key space must be partitioned among the peers. It turns out that the sizes of these partitions can differ substantially. Peers covering larger partitions have higher probabilities of being fingers of other peers. Thus, they also have higher probabilities of routing messages. Hence the skew in the load distribution and the need to employ another algorithm to eliminate this skew in the system operation phase.

In general, the invention can be of benefit in any peer-to-peer communication system. This holds particularly for hybrid systems made of devices, which are very different in their capabilities, as normally expected in mobile peer-to-peer applications.

As mentioned before, hierarchical peer-to-peer systems are particularly suitable for mobile peer-to-peer environments. Therefore, embodiments of the present invention can improve the load balancing in particular in mobile peer-to-peer environments.

Although the discussed embodiments used a Chord system as DHT system, any other structured peer-to-peer protocol could also be used to achieve the same advantages.

Embodiments of the present invention bring a more stable and less costly network operation as well as higher fault resilience. Thus, it has a strong economic impact on the network as a whole.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program product runs on a computer. In other words, the inventive methods are, therefore, a computer program having a program code for performing the inventive methods, when the computer program runs on a computer.

**Claims**

1. A superpeer (100, S2) for participating in a hierarchical overlay peer-to-peer network (N1) with one or a plurality of other superpeers (S0, S1, S3, S4, S5, S6, S7) and enabling a leafnode (LN) to be attached via a leafnode overlay link (N2) with any of said superpeers (SO-S7), said superpeer (100, S2) comprising:

   a receiver (110) operative to receive an attach request message (112) indicating that said leafnode (LN) is requesting to be attached to said hierarchical peer-to-peer network (N1);
   a transmitter (120) operative to transmit an attach confirmation message (124) indicating that said leafnode (LN) shall be attached to said superpeer (100); and
   a processing unit (130), operative to, upon reception of an indication (114) from said receiver that an attach request message (112) has been received,
   compare a traffic load value representative of the traffic load of said superpeer (100, S2) with a traffic load value associated with and representative of the traffic load of at least one of said one or said several other superpeers (S0, S1, S3, S4), and
   control (131) said transmitter to transmit said attach confirmation message (124) to indicate that said leafnode is to be attached to said hierarchical peer-to-peer network through a leafnode overlay link with said superpeer (100), if the comparison reveals that said traffic load of said superpeer is lower than said traffic load of said other superpeer or lower than the traffic loads of said several other superpeers.

2. The superpeer of claim 1, wherein said processing unit (130) is further operative to, if said comparison reveals that said traffic load of said superpeer (100, S2) is higher than said traffic load of said other superpeer or higher than a minimum of the traffic loads of said several other superpeers, control (131) said transmitter (120) to transmit a forward attach request message (122) to said other superpeer or to one of said several superpeers (S0, S1, S3, S4).

3. The superpeer of claim 1 or 2, wherein said processing unit (130) is further operative to, if said comparison reveals that said traffic load of said superpeer (100, S2) is higher than said traffic load of said other superpeer or higher than a minimum of the traffic loads of said several other superpeers, control (131) said transmitter (120) to transmit said forward attach request message (122) to said other superpeer or to the one of said several other superpeers (S3) to which said minimum load traffic value ($\lambda_{min}$) is associated to.

4. The superpeer of claim 2, wherein said processing unit (130) is operative to, upon reception of said indication (114), check a forwarding count (CFC) associated to said attach request message (112), and
   control (131) said transmitter (120) to transmit said attach confirmation message (124),
   if said check reveals that said forwarding count (CFC) is equal to a given maximum forwarding count ($CFC_{max}$), or if said comparison reveals that said traffic load of said superpeer is lower than said traffic load of said other superpeer or lower than the traffic loads of said several other superpeers (S0, S1, S3, S4), and
   to otherwise increment said forwarding count (CFC) associated to said attach request message to obtain said forward attach request message (122) to be transmitted by the transmitter (120).

5. The superpeer of one of the claims 2 to 4, further comprising:

   a storing unit (140) operative to store a routing table comprising for at least one of said one or said several other superpeers (S0, S1, S3, S4):

      a unique overlay network identifier,
      an IP-adress, and
      said traffic load value,

   wherein said processing unit (130) is operative to use said routing table for said comparing of said traffic load values and controlling the transmission of said forward attach request message (122).

6. A superpeer of one of the claims 1 to 5, wherein said processing unit (130) is operative to measure said traffic load of said superpeer (100) and to compare said traffic load value of said superpeer (100) with a given traffic load threshold, and to control said transmitter (120) to transmit an move attach request message (132) to said other superpeer or to the one of said several other superpeers (S0, S1, S3, S4) to which said minimum load traffic value ($\lambda_{min}$) is associated to initiate an attachment transfer of a leafnode, which is currently attached to said superpeer (100) such that said leafnode gets attached to a superpeer of said plurality of other superpeers.

7. The superpeer of one of the claims 1 to 6, wherein said traffic load values are relative traffic load values obtainable by dividing the measured absolute traffic load value through a given superpeer specific maximum traffic load value.

8. The superpeer of one of the claims 1 to 7, wherein said superpeer overlay network (N1) is a dynamic hash table (DHT) overlay network.

9. The superpeer of one of the claims 1 to 8, wherein said superpeer overlay network (N1) is a dynamic hash table Chord overlay network.

10. A method for operating a superpeer (100, S2), which is participating in a hierarchical overlay peer-to-peer network (N1) with one or a plurality of other superpeers (S0, S1, S3, S4, S5, S6, S7) and enabling a leafnode (LN) to be attached via a leafnode overlay link (N2) to any of said superpeers (SO-S7), said method comprising the following steps:

   receiving an attach request message (112) indicating that said leafnode (LN) is requesting to be attached to said hierarchical peer-to-peer network (N1);
   comparing a traffic load value of said superpeer (100, S2) with a traffic load value associated with and representative of the traffic load of at least one of said one or said several other superpeers (S0, S1, S3, S4), and transmitting an attach confirmation message (124) to indicate that said leafnode is to be attached to said hierarchical peer-to-peer network via a leafnode overlay link (N2) with said superpeer (100), if the comparison reveals that said traffic load of said superpeer is lower than said traffic load of said other superpeer or lower than the traffic loads of said several other superpeers (S0, S1, S3, S4).

11. Computer program having a program code for performing a method in accordance with claim 10, when the program runs on a computer.

**Patentansprüche**

1. Ein Über-Partner (100, S2) zum Teilnehmen an einem hierarchischen Überlagerungs-Partner-zu-Partner-Netzwerk (N1) mit einem oder mit einer Mehrzahl von anderen Über-Partnern (S0, S1, S3, S4, S5, S6, S7) und zum Ermöglichen, dass ein Blattknoten (LN) über eine Blattknotenüberlagerungsverknüpfung an jeglichen der Über-Partner (S0-S7) angebracht wird, wobei der Über-Partner (100, S2) folgende Merkmale aufweist:

   einen Empfänger (110), der wirksam ist, um eine Anbringungsanforderungsmeldung (112) zu empfangen, die anzeigt, dass der Blattknoten (LN) anfordert, an das hierarchische Partner-zu-Partner-Netzwerk (N1) angebracht zu werden;
   einen Sender (120), der wirksam ist, um eine Anbringungsbestätigungsmeldung (124) zu übertragen, die anzeigt, dass der Blattknoten (LN) an den Über-Partner (100) angebracht werden soll; und
   eine Verarbeitungseinheit (130), die wirksam ist, um nach dem Empfang einer Anzeige (114) von dem Empfänger, dass eine Anbringungsanforderungsmeldung (112) empfangen wurde,
   einen Verkehrslastwert, der die Verkehrslast des Über-Partners (100, S2) darstellt, mit einem Verkehrslastwert zu vergleichen, der der Verkehrslast von zumindest einem des einen oder der mehreren anderen Über-Partner (S0, S1, S2, S4) zugeordnet ist, und
   den Sender zu steuern (131), um die Anbringungsbestätigungsmeldung (124) zu übertragen, um anzuzeigen, dass der Blattknoten an das hierarchische Partner-zu-Partner-Netzwerk durch eine Blattknotenüberlagerungsverknüpfung mit dem Über-Partner (100) angebracht werden soll, wenn der Vergleich ergibt, dass die Verkehrslast des Über-Partners niedriger ist als die Verkehrslast des anderen Über-Partners oder niedriger ist als die Verkehrslasten der mehreren anderen Über-Partner.

2. Der Über-Partner gemäß Anspruch 1, bei dem die Verarbeitungseinheit (130) ferner wirksam ist, wenn der Vergleich ergibt, dass die Verkehrslast des Über-Partners (100, S2) höher ist als die Verkehrslast des anderen Über-Partners oder höher ist als ein Minimum der Verkehrslasten der mehreren anderen Über-Partner, um den Sender (120) zu steuern (131), um eine Vorwärts-Anbringungsanforderungsmeldung (122) zu dem anderen Über-Partner oder zu einem der mehreren Über-Partner (S0, S1, S3, S4) zu übertragen.

3. Der Über-Partner gemäß Anspruch 1 oder 2, bei dem die Verarbeitungseinheit (130) ferner wirksam ist, wenn der Vergleich ergibt, dass die Verkehrslast des Über-Partners (100, S2) höher ist als die Verkehrslast des anderen Über-Partners oder höher ist als ein Minimum der Verkehrslasten der mehreren anderen Über-Partner, den Sender (120) zu steuern (131), um die Vorwärts-Anbringungsanforderungsmeldung (122) zu dem anderen Über-Partner oder zu dem einen der mehreren anderen Über-Partner (S3) zu übertragen, denen der Minimallast-Verkehrswert $\lambda_{min}$ zugeordnet ist.

4. Der Über-Partner gemäß Anspruch 2, bei dem die Verarbeitungseinheit (130) wirksam ist, um nach dem Empfang der Anzeige (114) einen Vorwärtszählwert (CFC) zu prüfen, der der Anbringungsanforderungsmeldung (112) zugeordnet ist, und
den Sender (120) zu steuern (131), um die Anbringungsbestätigungsmeldung (124) zu übertragen,
wenn die Prüfung ergibt, dass der Vorwärtszählwert (CFC) gleich einem gegebenen Maximalvorwärtszählwert (CF-$C_{max}$) ist, oder
wenn der Vergleich ergibt, dass die Verkehrslast des Über-Partners niedriger ist als die Verkehrslast des anderen Über-Partners oder niedriger ist als die Verkehrslasten der verschiedenen anderen Über-Partner (S0, S1, S3, S4) und um ansonsten den Vorwärtszählwert (CFC) zu inkrementieren, der der Anbringungsanforderungsmeldung zugeordnet ist, um die Vorwärtsanbringungsanforderungsmeldung (122) zu erhalten, die durch den Sender (120) übertragen werden soll.

5. Der Über-Partner gemäß einem der Ansprüche 2 bis 4, der ferner folgende Merkmale aufweist:

eine Speichereinheit (140), die wirksam ist, um eine Routing-Tabelle zu speichern, die für zumindest einen des einen oder der mehreren anderen Über-Partner (S0, S1, S3, S4) folgendes aufweist:

einen eindeutigen Überlagerungsnetzwerk-Identifizierer,
eine IP-Adresse, und
den Verkehrslastwert,

wobei die Verarbeitungseinheit (130) wirksam ist, um die Routing-Tabelle für das Vergleichen der Verkehrslastwerte und Steuern der Übertragung der Vorwärtsanbringungsanforderungsmeldung (122) zu verwenden.

6. Ein Über-Partner gemäß einem der Ansprüche 1 bis 5, bei dem die Verarbeitungseinheit (130) wirksam ist, um die Verkehrslast des Über-Partners (100) zu messen und den Verkehrslastwert des Über-Partners (100) mit einer gegebenen Verkehrslastschwelle zu vergleichen und den Sender (120) zu steuern, um eine Bewegungsanbringungsanforderungsmeldung (132) zu dem anderen Über-Partner oder zu dem einen der mehreren anderen Über-Partner (S0, S1, S3, S4) zu übertragen, dem der Minimallastverkehrswert $\lambda_{min}$ zugeordnet ist, um einen Anbringungstransfer eines Blattknotens zu initiieren, der gegenwärtig an den Über-Partner (100) angebracht ist, derart, dass der Blattknoten an einen Über-Partner der Mehrzahl der anderen Über-Partner angebracht wird.

7. Der Über-Partner gemäß einem der Ansprüche 1 bis 6, bei dem die Verkehrslastwerte relative Verkehrslastwerte sind, die erhalten werden können durch Teilen des gemessenen Absolutverkehrslastwerts durch einen gegebenen Über-Partner-spezifischen Maximalverkehrslastwert.

8. Der Über-Partner gemäß einem der Ansprüche 1 bis 7, bei dem das Über-Partner-Überlagerungsnetzwerk (N1) ein Überlagerungs-Netzwerk einer dynamischen Hash-Tabelle (DHT) ist.

9. Der Über-Partner gemäß einem der Ansprüche 1 bis 8, bei dem das Über-Partner-Überlagerungsnetzwerk (N1) ein Chord-Überlagerungsnetzwerk einer dynamischen Hash-Tabelle ist.

10. Ein Verfahren zum Betreiben eines Über-Partners (100, S2), der an einem hierarchischen Überlagerungs-Partner-zu-Partner-Netzwerk (N1) mit einem oder einer Mehrzahl von anderen Über-Partnern (S0, S1, S3, S4, S5, S6, S7) teilnimmt, und Ermöglichen, dass ein Blattknoten (LN) über eine Blattknotenüberlagerungsverknüpfung (N2) an einen der Über-Partner (S0-S7) angebracht wird, wobei das Verfahren folgende Schritte aufweist:

Empfangen einer Anbringungsanforderungsmeldung (112), die anzeigt, dass der Blattknoten (LN) anfordert, an das hierarchische Partner-zu-Partner-Netzwerk (N1) angebracht zu werden;

Vergleichen eines Verkehrslastwerts des Über-Partners (100, S2) mit einem Verkehrslastwert, der der Verkehrslast von zumindest einem des einen oder der mehreren anderen Über-Partner (S0, S1, S3, S4) zugeordnet ist und denselben repräsentiert, und

Übertragen einer Anbringungsbestätigungsmeldung (124), um anzuzeigen, dass der Blattknoten an das hierarchische Partner-zu-Partner-Netzwerk über eine Blattknoten-Überlagerungsverknüpfung (N2) mit dem Über-Partner (100) angebracht werden soll, wenn der Vergleich ergibt, dass die Verkehrslast des Über-Partners niedriger ist als die Verkehrslast des anderen Über-Partners oder niedriger ist als die Verkehrslasten der mehreren anderen Über-Partner (S0, S1, S3, S4).

**11.** Computerprogramm mit einem Programm-Code zum Ausführen eines Verfahrens gemäß Anspruch 10, wenn das Programm auf einem Computer läuft.

## Revendications

**1.** Super-pair (100, S2) pour participer à un réseau pair à pair superposé hiérarchique (N1) avec un ou une pluralité d'autres super-pairs (S0, S1, S3, S4, S5, S6, S7) et permettant d'unir un noeud feuille (LN) via une liaison superposée de noeud feuille (N2) à l'un quelconque desdits super-pairs (S0-S7), ledit super-pair (100, S2) comprenant :

un récepteur (110) opérationnel pour recevoir un message de demande d'union (112) indiquant que ledit noeud feuille (LN) demande d'être uni audit réseau pair à pair hiérarchique (N1) ;
un émetteur (120) opérationnel pour transmettre un message de confirmation d'union (124) indiquant que ledit noeud feuille (LN) doit être uni audit super-pair (100) ; et
une unité de traitement (130) opérationnelle, à la réception d'une indication (114) dudit récepteur qu'un message de demande d'union (112) a été reçu, pour
comparer une valeur de charge de trafic représentative de la charge de trafic dudit super-pair (100, S2) à une valeur de charge de trafic associée à et représentative de la charge de trafic d'au moins l'un parmi ledit un ou lesdits plusieurs autres super-pairs (S0, S1, S3, S4), et
commander (131) ledit émetteur pour transmettre ledit message de confirmation d'union (124) pour indiquer que ledit noeud feuille doit être uni audit réseau pair à pair hiérarchique via une liaison superposée de noeud feuille avec ledit super-pair (100) si la comparaison révèle que ladite charge de trafic dudit super-pair est inférieure à la charge de trafic dudit autre super-pair ou inférieure aux charges de trafic desdits plusieurs autres super-pairs.

**2.** Super-pair selon la revendication 1, dans lequel ladite unité de traitement (130) est par ailleurs opérationnelle, si ladite comparaison révèle que ladite charge de trafic dudit super-pair (100, S2) est supérieure à la charge de trafic dudit autre super-pair ou supérieure à un minimum des charges de trafic desdits plusieurs autres super-pairs, pour commander (131) ledit émetteur (120) pour transmettre un message de demande d'union direct (122) audit autre super-pair ou à l'un desdits plusieurs super-pairs (S0, S1, S3, S4).

**3.** Super-pair selon la revendication 1 ou 2, dans lequel ladite unité de traitement (130) est par ailleurs opérationnelle, si ladite comparaison révèle que ladite charge de trafic dudit super-pair (100, S2) est supérieure à la charge de trafic dudit autre super-pair ou supérieure à un minimum des charges de trafic desdits plusieurs autres super-pairs, pour commander (131) ledit émetteur (120) pour transmettre ledit message de demande d'union direct (122) audit autre super-pair ou à celui parmi lesdits plusieurs autres super-pairs (S3) auquel est associée ladite valeur de charge de trafic minimale ($\lambda_{min}$).

**4.** Super-pair selon la revendication 2, dans lequel ladite unité de traitement (130) est opérationnelle, à la réception de ladite indication (114), pour vérifier une quantité d'envoi (CFC) associée audit message de demande d'union (112), et
pour commander (131) ledit émetteur (120) pour transmettre ledit message de confirmation d'union (124),
si ladite vérification révèle que ladite quantité d'envoi (CFC) est égale à une quantité d'envoi maximale ($CFC_{max}$) donnée, ou
si ladite comparaison révèle que ladite charge de trafic dudit super-pair est inférieure à ladite charge de trafic dudit autre super-pair ou inférieure aux charges de trafic desdits plusieurs autres super-pairs (S0, S1, S3, S4), et
pour incrémenter autrement ladite quantité d'envoi (CFC) associée audit message de demande d'union, pour obtenir ledit message de demande d'union direct (122) à transmettre par l'émetteur (120).

**5.** Super-pair selon l'une des revendications 2 à 4, comprenant par ailleurs:

une unité de mémoire (140) destinée à mémoriser un tableau de routage comprenant pour au moins l'un parmi ledit un ou lesdits plusieurs autres super-pairs (S0, S1, S3, S4):

un identificateur de réseau superposé unique,
une adresse IP, et
ladite valeur de charge de trafic,

dans lequel ladite unité de traitement (130) est opérationnelle pour utiliser ledit tableau de routage pour ladite comparaison desdites valeurs de charge de trafic et la commande de la transmission dudit message de demande d'union direct (122).

**6.** Super-pair selon l'une des revendications 1 à 5, dans lequel ladite unité de traitement (130) est opérationnelle pour mesurer ladite charge de trafic dudit super-pair (100) et pour comparer ladite valeur de charge de trafic dudit super-pair (100) à un seuil de charge de trafic donné, et pour commander l'émetteur (120) pour transmettre un déplacement de message de demande d'union (132) vers ledit autre super-pair ou à celui parmi lesdits plusieurs autres super-pairs (S0, S1, S3, S4) auquel est associée ladite valeur de charge de trafic minimale ($\lambda_{min}$), pour initier un transfert d'union d'un noeud feuille qui est actuellement uni audit super-pair (100), de sorte que ledit noeud feuille soit uni à un super-pair parmi ladite pluralité d'autres super-pairs.

**7.** Super-pair selon l'une des revendications 1 à 6, dans lequel lesdites valeurs de charge de trafic sont des valeurs de charge de trafic relatives pouvant être obtenues en divisant la valeur de charge de trafic absolue mesurée par une valeur de charge de trafic maximale spécifique de super-pair donnée.

**8.** Super-pair selon l'une des revendications 1 à 7, dans lequel ledit réseau superposé de super-pairs (N1) est un réseau superposé de tableaux d'adressage dynamiques (DHT).

**9.** Super-pair selon l'une des revendications 1 à 8, dans lequel ledit réseau superposé de super-pairs (N1) est un réseau superposé en corde de tableaux d'adressage dynamiques.

**10.** Procédé pour faire fonctionner un super-pair (100, S2) qui participe à un réseau pair à pair superposé hiérarchique (N1) avec un ou une pluralité d'autres super-pairs (S0, S1, S3, S4, S5, S6, S7) et permet qu'un noeud feuille (LN) soit uni via une liaison superposée de noeud feuille (N2) avec l'un quelconque desdits super-pairs (SO-S7), ledit procédé comprenant les étapes suivantes consistant à:

recevoir un message de demande d'union (112) indiquant que ledit noeud feuille (LN) demande d'être uni audit réseau pair à pair hiérarchique (N1);
comparer une valeur de charge de trafic dudit super-pair (100, S2) à une valeur de charge de trafic associée à et représentative de la charge de trafic d'au moins l'un parmi ledit un ou lesdits plusieurs autres super-pairs (S0, S1, S3, S4), et
transmettre un message de confirmation d'union (124) pour indiquer que ledit noeud feuille doit être uni audit réseau pair à pair hiérarchique via une liaison superposée de noeud feuille (N2) avec ledit super-pair (100) si la comparaison révèle que ladite charge de trafic dudit super-pair est inférieure à ladite charge de trafic dudit autre super-pair ou inférieure aux charges de trafic desdits plusieurs autres super-pairs (S0, S1, S3, S4).

**11.** Programme d'ordinateur ayant un code de programme pour réaliser un procédé selon la revendication 10 lorsque le programme est exécuté sur un ordinateur.

# FIG 1

# FIG 2A

n denotes a joining leafnode

Si denotes ith contacted superpeer of n

1: Connection Forward Counter CFC = 0

2: begin

3: n contacts $S_{CFC}$

4: if $CFC = CFC_{max}$ or $\lambda(S_{CFC}) \leq \lambda_{min}$ in $S_{CFC}$´s routing table

5: connect n to $S_{CFC}$

6: exit

7: else

8: $S_{CFC+1}$ = superpeer with minimal $\lambda$ in $S_{CFC}$´s routing table

9: CFC++

10: go to 3

11: end

# FIG 2B

```
┌─────────────────────┐
│ Recieving of attach │  ┌210
│   request message   │
└─────────────────────┘
           │
           ▼
        ╱──────╲       ┌220
       ╱ Comparing ╲          ┌─────────────────────┐
      ╱   CFC = CFC  ╲  Yes   │ - Transmitting of attach │  ┌230
      ╲          max ╱ ─────► │  confirmation massage   │
       ╲          ╱           └─────────────────────┘
        ╲──────╱
           │No
           ▼
        ╱──────╲       ┌240
       ╱ Comparing ╲  Yes
      ╱  λ(S  ) ≤ λ  ╲ ─────►
      ╲    CFC    min ╱
       ╲          ╱
        ╲──────╱
           │No
           ▼
┌─────────────────────┐
│ - Increment CFC     │
│ - Transmitting of   │  ┌250
│  attach request     │
│  massage            │
└─────────────────────┘
```

Comparing $CFC = CFC_{max}$

Comparing $\lambda(S_{CFC}) \leq \lambda_{min}$

## FIG 3A

300

## FIG 3B

300

## FIG 4

## FIG 5

# FIG 6

# FIG 7

| key space | ⌐730 |
| overlay network | ⌐720 |
| underlaying physical network | ⌐710 |

# FIG 8

Chord ring

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003055892 A1
- US 2005086288 A1

**Non-patent literature cited in the description**

- **ZOELS S. ; DESPOTOVIC Z ; KELLERER W.** Cost-Based Analysis of Hierarchical DHT Design. *Sixth IEEE International Conference on P2P Computing,* 2006
- **RAO A. ; LAKSHMINARAYANAN K. ; SURANA S. ; KARP R. ; STOICA I.** Load Balancinig Structured P2P Systems. *International Workshop on Peer-to-Peer Systems (IPTPS ' 03,* 2003
- **BYERS J. ; CONSIDINE J. ; MITZENMACHER M.** Simple Load Balancing for DHTs. *International Workshop on Peer-to-Peer Systems (IPTPS '03,* 2003
- The Power of Two Random Choices. **MITZENMACHER.** A Survey of Techniques and Results. Kluwer Academic Publishers, 2001, 255-312
- A Thermal-Dissipation-based Approach for Balancing Data Load in Distributed Hash Tables. *IEEE Conference on Local Computer Networks (LCN 2004,* 2004
- **KARGER ; RUHL.** Simple Efficient Load Balancing Algorithms for Peer-to-Peer Systems. *International Workshop on Peer-to-Peer Systems (IPTPS '04,* 2004
- **KENTHAPADI ; MANKU TRY.** Decentralized Algorithms using both Local and Random Probes for P2P Load Balancing. *ACM Symposium on Parallelism in Algorithms and Architectures (SPAA05,* 2005